# EUROPÄISCHE PATENTSCHRIFT

(11) **EP 2 214 914 B1**
(45) Veröffentlichungstag und Bekanntmachung des Hinweises auf die Patenterteilung: **12.12.2012**
(21) Anmeldenummer: 08846129.8
(22) Anmeldetag: 20.10.2008
(51) Int. Cl.: B42D 15/00, B42D 15/10, G03H 1/04

(54) **VERFAHREN ZUR HERSTELLUNG EINES SICHERHEITSMERKMALS FÜR EIN DOKUMENT UND ENTSPRECHENDES DOKUMENT**
METHOD FOR PRODUCING A SECURITY FEATURE FOR A DOCUMENT AND CORRESPONDING DOCUMENT
PROCÉDÉ DE PRODUCTION D'UN ELEMENT DE SÉCURITÉ POUR UN DOCUMENT ET DOCUMENT CORRESPONDANT

(30) Priorität: 31.10.2007 DE 102007052326
(43) Veröffentlichungstag der Anmeldung: 11.08.2010
(73) Patentinhaber: Bundesdruckerei GmbH, 10958 Berlin (DE)
(72) Erfinder: LEOPOLD, Andrè, 10119 Berlin (DE); PAESCHKE, Manfred, 16348 Wandlitz (DE)
(74) Vertreter: Richardt Patentanwälte GbR
(86) Internationale Anmeldenummer: PCT/EP2008/064148
(87) Internationale Veröffentlichungsnummer: WO 2009/056467

(56) Entgegenhaltungen:
- EP-A- 0 420 261
- WO-A-02/03104
- DE-A1-102005 055 123
- US-A- 4 677 285

## Beschreibung

Die Erfindung betrifft ein Verfahren zur Herstellung eines Sicherheitsmerkmals für ein Dokument sowie ein Dokument mit einem Sicherheitsmerkmal.

Aufgrund der fortschreitenden Entwicklung technischer Möglichkeiten, um bedeutsame, wertvolle oder personalisierte Gegenstände wie Dokumente, Urkunden, Banknoten, Ausweise, Kreditkarten und vieles mehr zu reproduzieren, ist es notwendig, die besagten Objekte mit Sicherheitsmerkmalen auszustatten. Sicherheitsmerkmale sind dabei charakteristische Eigenschaften, die die Authentizität oder Echtheit eines Objektes beweisen. Gängige Sicherheitsmerkmale sind dabei zum Beispiel Wasserzeichen, Sicherheitsfäden, Kinegrame und Hologramme, welche unter zum Teil hohem technischem Aufwand in die vor Replikation zu schützenden Gegenstände eingebracht werden.

Beispielsweise beschreibt die DE 100 40 785 A1 ein Sicherheitssystem, insbesondere für Wertdokumente, bei dem ein Sicherheitselement in einer Trägerebene vorgesehen ist, das unter Lichteinfall auf holographischem Wege außerhalb der Trägerebene ein Muster rekonstruiert, in dem eine versteckte Information gespeichert ist.

Die DE 199 04 823 A1 offenbart ein Verfahren zur Herstellung einer Folie, bei dem zunächst eine Stützträgerfolie mittels eines Prägewerkzeuges geprägt wird, wobei das Prägewerkzeug holographische Strukturen aufweist und anschließend eine Folie auf der geprägten Stützträgerfolie erzeugt wird, sodass sich auf der Folie zumindest ein Hologramm ergibt.

Das Dokument DE 10 2005 05 5123 A1 offenbart ein Dokument mit einem dokumentenindividuellen Sicherheitsmerkmal.

Die DE 100 54 167 A1 offenbart ein Verfahren zur Herstellung von Hologrammen, wobei eine Mastervorrichtung mit einer reliefartigen Oberflächenstruktur aus Kunststoff bereitgestellt wird, die der vorgesehenen holographischen Struktur entspricht. Auf die Oberflächenstruktur der Mastervorrichtung wird ein strahlenhärtbarer Lack aufgebracht, wobei der Lack nach Härten als reproduziertes Hologramm von der Mastervorrichtung abgelöst werden kann.

Die DE 101 39 653 A1 offenbart ein Etikett mit erhöhter Fälschungssicherheit bestehend aus zumindest einer Trägerschicht, wobei auf der unteren Seite der Trägerschicht eine Klebeschicht vorhanden ist, dadurch gekennzeichnet, dass sich die Klebeschicht aus einem Haftkleber und/oder Heißkleber und einem durch Hitze aktivierbaren Reaktivkleber zusammensetzt.

Die EP 1 309 941 B1 offenbart eine optisch wirksame Struktur zur Personalisierung von Karten und dergleichen sowie ein Verfahren zur deren Herstellung.

Die EP 1 240 645 B1 offenbart ein Verfahren zum optischen Einschreiben und danach auch wieder Auslesen von digitalen Informationen in ein flächig ausgedehntes Speichermedium.

Die genannten Verfahren zur Einbringung von Sicherheitsmerkmalen, insbesondere von holographischen Strukturen, in Wertdokumente haben den Nachteil, dass das Einbringen der Sicherheitsmerkmale in die Wertdokumente nur mit speziellen, die Sicherheitsmerkmale selbst tragenden Materialien durchführbar ist. Diese Materialien umfassen besondere Klassen von Kunststoffen, die z.B. bezüglich ihrer Wärmedeformationsfähigkeit für thermische Prägeprozesse spezielle thermische Eigenschaften aufweisen müssen. In einem anderen Beispiel müssen im Falle der optischen Erzeugung insbesondere von Holographiestrukturen lichtaktive Seitenkettenpolymere oder ähnliche Materialien verwendet werden.

Die Verwendung von separaten Materialien, auf welche die Sicherheitsmerkmale aufgebracht werden, macht es jedoch erforderlich, dass nach Einbringen der Sicherheitsmerkmale diese Materialien in einem weiteren Arbeitsschritt in aufwändiger Form z.B. in Form von Klebefolien auf die Wertdokumente aufgebracht werden bzw. einlaminiert werden müssen.

Der Erfindung liegt demgegenüber die Aufgabe zugrunde, ein verbessertes Verfahren zur Herstellung eines Sicherheitsmerkmals für ein Dokument sowie ein verbessertes Dokument mit einem Sicherheitsmerkmal zu schaffen.

Die der Erfindung zugrunde liegenden Aufgaben werden jeweils mit den Merkmalen der unabhängigen Patentansprüche gelöst. Bevorzugte Ausführungsformen der Erfindung sind in den abhängigen Patentansprüchen angegeben.

Erfindungsgemäß wird ein Verfahren zur Herstellung eines dokumentenindividuellen Sicherheitsmerkmals für ein Dokument geschaffen. Das erfindungsgemäße Verfahren zur Herstellung umfasst dabei die Schritte des Bereitstellens eines Dokumentenrohlings, wobei der Dokumentenrohling zumindest eine Dokumentschicht aufweist, wobei sich die zumindest eine Dokumentenschicht über die gesamte Dokumentenfläche erstreckt wobei die zumindest eine Dokumentschicht in zumindest einem ersten räumlichen Bereich in zumindest einem ersten Wellenlängenbereich Licht absorbierend ist und in zumindest einem zweiten räumlichen Bereich in zumindest einem zweiten Wellenlängenbereich des sichtbaren Lichts transparent ist, wobei die zumindest eine Dokumentschicht ferner zumindest ein optisches dokumentenunspezifisches Sicherheitsmerkmal aufweist. In einem weiteren Schritt erfolgt das Ausbilden einer dokumentenindividuellen Oberflächenstruktur in dem ersten Bereich der zumindest einen Dokumentenschicht durch Absorption von zumindest einem Laserstrahl, wobei der zumindest eine Laserstrahl eine Wellenlänge in dem ersten Wellenlängenbereich aufweist, wobei die Oberflächenstruktur zur Ausbildung eines das dokumentenindividuelle Sicherheitsmerkmal bildenden Hologramms ausgebildet ist.

Das Dokument kann dabei ein Rohdokument, d.h. als nicht personalisierter Dokumentenrohling vorliegen, insbesondere als Rohling einer ID-Karte. Bei dem Rohdokument bzw. der ID-Karte kann es sich z. B. um eine Ausweiskarte, Kreditkarte, Bankkarte, Gesundheitskarte usw. handeln.

Hinreichende Transparenz in dem zweiten Wellenlängenbereich des sichtbaren Lichts ist dann gegeben, wenn es möglich ist, durch Aufsicht auf die Dokumentschicht mit bloßem Auge Informationen zu erfassen, welche als weitere Dokumentschichten in Form von Bildern, Schriftzügen oder ähnlichem unter oder neben jener Dokumentschicht angeordnet sind, welche das Sicherheitsmerkmal bildende Hologramm trägt.

Der Schritt des Ausbildens einer Oberflächenstruktur in dem ersten Bereich des Dokuments durch Absorption von zumindest einem Laserstrahl kann vor, während oder nach anderen Personalisierungsschritten, welche z. B. eine Lasergravur, elektrische Personalisierung durch ICs usw. umfassen können, erfolgen.

Das erfindungsgemäße Verfahren hat den Vorteil, dass diffraktive Strukturen, insbesondere Hologramme oder holografisch optische Elemente wie Linsenstrukturen auf ein nahezu beliebiges Substrat mit einer polymeren Oberfläche mit Hilfe des Lasers aufgebracht werden können. Aufgrund des hohen technischen Aufwandes zur Herstellung von Kopien holografischer Oberflächenstrukturen ist die Wahrscheinlichkeit der Fälschung von Dokumenten mit einem solchen holografischen Sicherheitsmerkmal sehr gering.

Ein weiterer Vorteil bietet sich durch das erfindungsgemäße Verfahren dadurch, dass ein Dokumentenrohling mit dokumentenunspezifischen optischen Sicherheitsmerkmalen zunächst unabhängig vom später personalisierten Dokument z.B. in einem Massenherstellungsverfahren hergestellt und bereitgestellt werden kann. Unter einem "dokumentenunspezifischen optischen Sicherheitsmerkmal" wird hier jedes optische Sicherheitsmerkmal verstanden, welches in sämtlichen der zu personalisierenden Dokumentenrohlingen identisch vorhanden ist, also nicht dokumentenindividuell ist.

In einem Personalisierungsschritt können individuell und dokumentenspezifisch verschiedene weitere dokumentenindividuelle Sicherheitsmerkmale in den Rohling eingebracht werden, so auch die besagte Oberflächenstruktur. Dies war im Stand der Technik bisher nicht möglich, da entweder eine nicht dokumentenspezifische Oberflächenstruktur im Rohling in Form einer speziell alleinig dafür vorgesehenen Dokumentenschichtschicht vorhanden war, oder da für Personalisierungszwecke eine Oberflächenstruktur auf eine separate Kunststoffschicht unabhängig vom Dokumentenrohling aufgebracht werden musste, um daraufhin mit dem Rohling zusammenlaminiert zu werden. Letzteres erhöht jedoch das Fälschungsrisiko eines entsprechenden Dokuments beträchtlich, da durch Auftrennen der laminierten Schichten und austauschen dieser separaten Kunststoffschicht die personalisierte Information des Dokuments verfälscht werden konnte.

Dadurch, dass in der vorliegenden Erfindung die Oberflächenstruktur in den fertigen Dokumententräger selbst in eine Schicht eingebracht wird, welche weitere optische Sicherheitsmerkmale trägt, kann zum einen ein effizienter Personalisierungsvorgang stattfinden, da keine weiteren Laminierungsschritte notwendig sind. Und zum anderen wird die Fälschungssicherheit eines solchen entstehenden Dokuments erhöht, da ein Austausch einer solchen die Oberflächenstruktur tragenden Dokumentschicht auch zwangsweise das technisch aufwändige Imitieren der weiteren optischen Sicherheitsmerkmale mit sich bringen würde, welche diese Schicht trägt.

Zu den optischen dokumentenspezifischen und unspezifischen Sicherheitsmerkmalen zählen beispielsweise:
- Guillochen: Guillochen werden mit Hilfe von so genanntem Liniendruck auf das Dokument aufgedruckt. Sie bestehen im Allgemeinen aus in verschiedenen Farben übereinander gedruckten Wellen- und Schleifenmustern;
- Mikro-Schrift: Hierbei handelt es sich um aufgedruckte Schriftzüge in kleinster Schrift. Mit bloßem Auge lässt sich die Mikro-Schrift kaum erkennen. Beispielsweise ist Mikro-Schrift auf den Euro-Banknoten als Bildelemente in die Motive eingearbeitet. Mit Hilfe einer Lupe kann die Mikro-Schrift gelesen werden;
- Metamere Systeme: Aufgrund metamerer Farbgleichheit können unterschiedliche spektrale Zusammensetzungen des Lichts bei Menschen den gleichen Farbeindruck hervorrufen;
- Aufdrucke mit Fluoreszenz, Phosphoreszenz und/oder Up-Conversion-Farben;
- Aufdrucke mit Infrarot-Farbe: Die Farbe wird nur unter Infrarot-Strahlung für Lesegeräte mit entsprechenden Sensoren sichtbar. Beispielsweise sind Euro-Banknoten mit diesem optischen Sicherheitsmerkmal ausgestattet;
- Barcodes, insbesondere ein- oder zweidimensionale Barcodes;
- Optisch variable Farben (OVI - Optical Variable Ink): Bei einer optisch variablen Farbe ändert sich der Farbeindruck je nach Betrachtungswinkel, da das Licht an den Pigmenten gebrochen, gestreut oder reflektiert wird;
- Hologramme und Kinegramme (transparent oder reflektierend);
- Wasserzeichen, insbesondere digitale Wasserzeichen, die eine maschinell auslesbare Information tragen;
- Passerdruck: Verschiedene Muster oder Symbole werden so über- oder aneinander gedruckt, dass sie zusammen ein bestimmtes Bild ergeben. Kleinste Abweichungen im Stand, d.h. so genannte Passerungenauigkeiten, können leicht mit bloßem Auge erkannt werden. Wenn sich die Teilbilder auf verschiedenen Seiten des Dokuments, wie zum Beispiel einer Banknote, befinden, bezeichnet man dieses optische Sicherheitsmerkmal als Durchsichtspasser;
- Durchsichtsfenster: Ein Fenster aus einer transparenten Kunststofffolie ist in dem Dokument eingearbeitet;
- Melierfasern: Dem Papier des Dokuments werden Fasern beigemischt, die unter UV-Licht in verschiedenen Farben leuchten;
- Sicherheitsfäden;
- Mikroperforation.
- Oberflächenprägungen
- Linsenstrukturen, z.B. Lentikularlinsenraster

Nach einer weiteren Ausführungsform der Erfindung kann die beschriebene personalisierten Bildung von Oberflächenstrukturen mit anderen Personalisierungsinformationen des Dokumentes, z. B. abgebildet im Druck, durch Lasergravur oder in einem IC (integrated circuit) im Dokument kombiniert werden, was den Fälschungsaufwand enorm steigert. Wie bereits erwähnt, sind dabei vorzugsweise diese anderen Personalisierungsinformationen des Dokumentes zumindest teilweise in derselben Schicht ausgebildet wie die dokumentenindividuelle Oberflächenstruktur.

Dadurch, dass die Dokumentschicht in dem ersten räumlichen Bereich in dem ersten Wellenlängenbereich stark absorbierend ist, ist gewährleistet, dass eine ausreichende Energieabsorption des Laserstrahls in dem ersten räumlichen Bereich der Dokumentschicht bei der Hologrammstruktur-Erzeugung stattfindet. Dadurch kann auch unter Verwendung relativ geringer Laserenergien hocheffektiv eine Erzeugung von Oberflächenstrukturen realisiert werden. Dadurch, dass jedoch die Dokumentschicht in dem zweiten räumlichen Bereich in einem zweiten Wellenlängenbereich des sichtbaren Lichts transparent ist, ist es wie oben erwähnt möglich, durch Aufsicht auf die Dokumentschicht mit bloßem Auge Informationen zu erfassen, welche als weitere Dokumentschichten in Form von Bildern, Schriftzügen oder ähnlichem unter oder neben jener Dokumentschicht angeordnet sind, welche das Sicherheitsmerkmal bildende Hologramm trägt.

Nach einer Ausführungsform der Erfindung umfasst das erfindungsgemäße Verfahren ferner den Schritt des Anbringens, wie zum Beispiel des Aufbringens oder Einbringens, einer in dem ersten und/oder zweiten Wellenlängenbereich reflektierenden Schicht auf oder in das Dokument. Das Aufbringen der reflektierenden Schicht kann hier z. B. durch den Druck einer reflektierenden Farbe auf eine der Dokumentschichten des Dokuments bewerkstelligt werden. Als weitere Möglichkeit lassen sich z. B. reflektierende Patches, Duplex-Folien und dergleichen integrieren. Solche Patches und Duplex-Folien können in der Folge mit den Dokumentschichten zu einem Folienverbund und damit zum eigentlichen Dokument laminiert werden. Als Laminatfolien als auch als Material für die Dokumentschicht kommen alle nach dem Stand der Technik für Ausweisdokumente verwendete Materialien in Betracht, insbesondere Polycarbonate (PC), Polyurethane (TPU), Polyester, Polyethylene, Teslin, ABS, sowie Verbünde aus solchen Folien, z. B. in Form von koextrudierten Folien, kaschierten Folien und dergleichen mehr.

Befindet sich nun diese reflektierende Schicht unterhalb der Oberflächenstruktur, welche zur Ausbildung eines das Sicherheitsmerkmal bildenden Hologramms ausgebildet ist, so kann das besagte Hologramm durch Beleuchtung der Oberflächenstruktur mit Licht des ersten oder zweiten Wellenlängenbereichs in Reflexion verifiziert werden. Voraussetzung für eine Verifizierung mit Licht des ersten Wellenlängenbereichs ist, dass aufgrund der Absorptionseigenschaften der Dokumentschicht, welche das Hologramm trägt, nicht das gesamte Licht des ersten Wellenlängenbereichs absorbiert wird. Bevorzugt erfolgt jedoch die Rekonstruktion des Hologramms mit Licht der zweiten Wellenlänge. Alternativ wird bei Fehlen einer reflektierenden Schicht unterhalb der Oberflächenstruktur das holografische Beugungsbild in Transmission hinter dem Dokument erscheinen. Zu diesem Zweck muss auch hier das Dokument im Bereich des gebeugten Strahls für die Wellenlänge, die zum Auslesen des Hologramms verwendet wird, transparent sein. Hierbei handelt es sich wiederum auch vorzugsweise um Licht des zweiten Wellenlängenbereichs.

In beiden Fällen wird das Hologramm mit herkömmlichen Methoden, z. B. mit Hilfe einer Mattscheibe, Projektionsfläche oder durch direkte Abbildung in eine Kamera sichtbar gemacht und aufgenommen. Allgemein jedoch kann beliebiges Licht verwendet werden, welches nicht zu stark durch das Dokument absorbiert wird.

Nach einer Ausführungsform der Erfindung wird die reflektierende Schicht in dem ersten Bereich im Dokument angebracht oder eingebracht. Eine reflektierende Schicht, welche lediglich auf den ersten Bereich des Dokuments ausgedehnt ist, hat dabei den Vorteil, dass das Auslesen von Informationen, welche in den weiteren Dokumentschichten des Dokument enthalten sind, visuell nicht beeinträchtigt wird, da bei starken Reflexionen der Kontrast durch den reflektierenden Hintergrund erheblich verschlechtert wird. Eine solche Reflektivität kann z. B. auch durch die Einbringung von Reflexions-Hologrammen mit entsprechender Wellenlängen-Selektivität erreicht werden. In diesem Fall findet eine Reflexion lediglich für Licht, welches zur Hologramm-Projektion verwendet wird, statt. Sichtbares Licht hingegen, welches zum Auslesen der in den weiteren Schichten des Dokuments enthaltenen Informationen verwendet wird, wird durch die reflektierende Schicht nicht beeinträchtigt.

Es sei jedoch darauf hingewiesen, dass der erste Wellenlängenbereich auch im Bereich des sichtbaren Lichts liegen kann, welches zum üblichen Auslesen von Dokumentinformationen verwendet wird, z. B. Namen, Geburtsdaten, Zahlenkombinationen für Kreditkarten usw. Voraussetzung ist jedoch dann, dass das Dokument eine solche Materialzusammensetzung aufweist, welche es ermöglicht, dass der erste Wellenlängenbereich oberflächennah stark absorbiert wird, jedoch für spektral neben dem ersten Wellenlängenbereich befindliche zweite Wellenlängenbereiche des sichtbaren Lichts transparent ist. In einem solchen Fall würden dann z. B. lasergravierte Schriften, Bilder usw. in einem anderen Farbton erscheinen, wenn sie bei "weißem" Tageslicht oder Kunstlicht betrachtet werden.

Nach einer weiteren Ausführungsform der Erfindung umfasst das Verfahren zur Herstellung eines Sicherheitsmerkmals für ein Dokument ferner den Schritt des Aufbringens einer Schutzschicht für die Oberflächenstruktur auf das Dokument, wobei die Schutzschicht in dem zweiten Wellenlängenbereich transparent ist. Eine solche Schutzschicht hat dabei den Vorteil, dass dadurch Abnutzungseffekte des Oberflächenreliefs vermieden werden können. Die Schutzschicht kann z. B. ein kratzfester Lack oder eine Schutzfolie sein. Eine Transparenz in dem ersten Wellenlängenbereich ist nicht zwingend notwendig, da das Aufbringen der Schutzschicht erst nach Ausbilden der Oberflächenstruktur erfolgt. Hier kann die Schutzschicht also durchaus trüb oder intransparent für den zur Ausbildung der Oberflächenstruktur verwendeten ersten Wellenlängenbereich erscheinen.

Nach einer Ausführungsform der Erfindung weisen die Schutzschicht und die sich an der Schutzschicht befindlichen Dokumentenseite ein Brechungsindex-Unterschied von mindestens 0,25 auf. Es sei jedoch angemerkt, dass ein höherer Brechungsindex-Unterschied bevorzugt ist, da der Unterschied der Brechungsindizes die Beugungseffizienz und damit die Intensität des erzeugten Hologramms bestimmt.

Nach einer Ausführungsform der Erfindung ist die zumindest eine Dokumentschicht zu einer oberflächennahen Absorption des Laserstrahls ausgebildet, vorzugsweise im Bereich bis 5 µm Tiefe. Dabei liegt für gepulste Laser die durch die Absorption des Laserstrahls durch die Dokumentschicht absorbierte Energie im Bereich zwischen 5 mJ/cm² und 500 mJ/cm². Die Pulslängen des Pulslasers liegen außerdem vorzugsweise im Bereich zwischen 1 ns und 100 ns. Aufgrund der oberflächennahen Absorption des gepulsten Laserstrahls bewirken thermische Effekte ein Entstehen der Oberflächenstruktur. Eine solche oberflächennahe Absorption ist beispielsweise aus J. Chem. Phys., Vol. 114, Nr. 3, 15. Januar 2001 (Baldus et al.) bekannt.

Aufgrund der gewählten absorbierten Energiebereiche liegt dabei die Modulationstiefe eines solchen Oberflächengitters typischerweise im Bereich zwischen einigen 100 nm bis 1 µm bei Streifenabständen von für Hologramme typischen ungefähr 1 µm. Bevorzugt sind dabei Streifenabstände kleiner als 5 µm, da mit wachsendem Streifenabstand die Amplitude der Oberflächengitter abnimmt. Gleichzeitig bedeuten große Streifenabstände kleine Winkel der Beugungsordnung, die ebenfalls nicht gewünscht sind.

Zur Herstellung eines Oberflächengitters müssen zwei zueinander kohärente Laserpulse in dem absorbierenden Teil der Dokumentschicht, vorzugsweise der Oberfläche des Dokuments, interferieren. Es sei angemerkt, dass bei der Verwendung von Pulslasern zum Einbringen des Oberflächengitters ein einziger Puls genügt. Dazu passiert, wie nach dem Stand der Technik bekannt, ein Laserstrahlpuls einen Strahlverteiler, wodurch zwei Teilpulse generiert werden. Einer dieser Teilstrahlen wird aufgeweitet und führt auf einen Spatial Light Modulator (SLM), der z. B. als LCD, DMD oder LCoS ausgebildet sein kann. Der Spatial Light Modulator gibt dabei dem Strahl eine Modulation auf. Mit Hilfe des SLM ist es sogar möglich, für jedes Dokument eine neue und damit individuelle Information zu verwenden.

Als Alternative oder Zusatz kann für jedes Dokument ein statisches Muster verwendet werden. Hierzu genügt es z. B., wenn der Laserstrahl eine Maske passiert, die ihm wiederum ein entsprechendes Muster aufmoduliert. Diese Maske kann z. B. ein Länderwappen oder Firmenlogo darstellen oder auch Ausgangspunkt für ein holografisch-optisches Element sein.

Nach Passieren des SLM oder der Maske werden die beiden Laserstrahlen auf dem Dokument zur Interferenz gebracht. Gelten die Bedingungen für Pulsenergie und Absorption, entsteht ein Oberflächengitter. Bei entsprechender Fokussierung des aufgeweiteten Laserstrahls entsteht dabei ein Fourier-Hologramm. Wenn die Strahlen aus derselben Richtung auf das Dokument treffen, ist dieses Fourier-Hologramm ein Transmissions-Hologramm. Zu beachten ist dabei, dass die Polarisation der weiteren Teilstrahlen parallel zueinander ist. Die Intensitäten der beiden Teilstrahlen sollten möglichst identisch sein, in diesem Fall ergibt sich ein guter Intensitätskontrast des Transmissionsgitters.

Es ist auch möglich, einen mit dem durch die Maske oder dem SLM definierten bildmodulierten Laserstrahl auf das Dokument zu bringen, und bei Bedarf das Bild der Maske über ein Objektiv zu verkleinern. Bei entsprechenden Energien und kleinen Abständen zwischen hellen und dunklen Bereichen entstehen ebenfalls entsprechende Oberflächenstrukturen. Bevorzugt werden hier digital berechnete Beugungsstrukturen abgebildet, um sich hier die holografische Rekonstruktion bei einer maschinellen Detektion zunutze zu machen. Die Detektion gewöhnlicher (nicht beugender) Strukturen gestaltet sich im Gegensatz zu holografischen schwieriger, wobei jedoch eine solche Detektion ebenfalls möglich ist und zumindest eine forensische Anwendung aufweist.

Auf diese Weise lassen sich z. B. auch holografisch optische Elemente direkt erzeugen. Diese Elemente können optische Funktionen, wie Linsen- und andere Strukturen nachbilden. Nach dem Stand der Technik erfolgt das Einbringen solcher Linsenstrukturen über entsprechend geformte Prägebleche, die sehr aufwendig und teuer herzustellen sind.

Nach einer Ausführungsform der Erfindung handelt es sich bei dem ersten Wellenlängenbereich um einen Infrarot- oder UV-Wellenlängenbereich. Da die hier besagten Wellenlängenbereiche nicht im sichtbaren Licht enthalten sind und die Dokumentenoberfläche vorzugsweise damit vollständig im sichtbaren Wellenlängenbereich des Lichts transparent ist, ist eine qualitativ hohe Auslesbarkeit von Informationen, welche in den weiteren Schichten des Dokuments enthalten sind, gewährleistet.

Nach einer Ausführungsform der Erfindung weist die erzeugte Oberflächenstruktur eine Modulationstiefe im Bereich von 50 nm bis 50 µm auf.

Nach einer Ausführungsform der Erfindung entspricht die Information im Oberflächen-Hologramm einer personalisierten Information, z. B. in Form eines 2D-Barcodes, eines Lichtbildes, eines Namens usw. Mit Hilfe des Laserstrahls kann diese Information später rekonstruiert werden, indem das Bild z. B. auf einen Schirm projiziert und von dort von einer Kamera aufgenommen und ausgewertet wird.

Nach einer Ausführungsform der Erfindung entspricht die Information im Oberflächen-Hologramm einer dokumententypischen Information, wie z. B. einem Länderwappen und dergleichen.

Nach einer Ausführungsform der Erfindung bildet das Oberflächen-Hologramm holografisch-optische Elemente, die z. B. Linsenstrukturen erzeugen, mit denen sich Kippeffekte im Hologramm erzeugen lassen.

Nach einer Ausführungsform der Erfindung weist die Dokumentschicht Partikel zur Verbesserung der Lichtabsorption in dem ersten Wellenlängenbereich in zumindest dem einen ersten räumlichen Bereich auf. Dabei sind vorzugsweise die Partikel entweder homogen in der Dokumentschicht verteilt oder homogen ausschließlich in dem ersten räumlichen Bereich der Dokumentschicht verteilt. Vorzugsweise ist dabei die Dokumentschicht, welche diese homogenen Partikel enthält, die oberste Folie, die mit weiteren Dokumentschichten zum eigentlichen Dokument laminiert wurde. Damit ist eine oberflächennahe Absorption in dem ersten Wellenlängenbereich durch das Dokument gewährleistet. Allerdings ist es bei mehrschichtigen Laminaten ohne weiteres möglich, Hologramme in mehreren Ebenen vertikal übereinander zu erzeugen. Dies erhöht weiter die Fälschungssicherheit der besagten Sicherheitsdokumente. Durch geeignete Wahl der zur Hologrammerzeugung verwendeten Laserwellenlängen, sowie der Absorptionseigenschaften der besagten Folienschichten ist es möglich, nach Aufbringen der Folienschichten eine schichtweise Erzeugung der Hologramme durchzuführen. Aufgrund der stark unterschiedlichen Absorptionseigenschaften der Schichten findet eine verwendete Laserwellenlänge ausschließlich zur Hologrammstrukturerzeugung in einer speziell bezüglich der Absorptionseigenschaften für diese Wellenlänge ausgebildeten zugehörigen Dokumentschicht statt. Damit lassen sich auch kombinierte Effekte erreichen, z. B. das Zusammensetzen eines Gesamtbilds aus den verschiedenen Einzelhologrammen.

Es sei hier angemerkt, dass unter dem Begriff "Dokumentschicht", in welche die Oberflächenstruktur eingebracht wird, jede beliebige Schicht des Dokuments verstanden wird. Dabei muss diese Schicht nicht von vorneherein Dokumentinformationen in Form von Schriftzügen oder ähnlichem beinhalten. Bei einer solchen Dokumentschicht kann es sich auch um eine Schicht handeln, die vor Einbringen der Oberflächenstruktur keinerlei Information trägt.

Bei den Partikeln handelt es sich um Farbpigmente und/oder Titandioxid oder um andere Partikel, welche eine hohe Lichtabsorption in dem ersten Wellenlängenbereich gewährleisten. Damit ist es möglich, aufgrund des Vorhandenseins der Partikel auch mit relativ geringen Laserenergien des Laserstrahls Oberflächenstrukturen durch thermische Effekte aufgrund der hocheffizienten Absorption der Laserpulse zu realisieren.

Nach einer Ausführungsform der Erfindung ist das Dokument bzw. sind die Dokumentschichten aus einem Polymermaterial ausgebildet. Ist den Absorptionsbedingungen genüge getan, können nahezu beliebige Polymermaterialien zur Herstellung von Dokumenten verwendet werden, ohne dass zur Erzeugung von holografischen Strukturen lichtaktive Polymerfilme, Block- und/oder Pfropf-Polymere verwendet werden müssen. Relevant ist lediglich, dass das Dokument in dem ersten Wellenlängenbereich in dem ersten räumlichen Bereich stark lichtabsorbierend ist. Dadurch ist gewährleistet, dass Oberflächenstrukturen durch minimale (Puls-)Energie der absorbierten Laserstrahlen erzeugt werden können.

Nach einer weiteren Ausführungsform der Erfindung sind weitere Dokumentenschichten des Dokumentenrohlings aus demselben Material ausgebildet sind wie die das dokumentenindividuelle Sicherheitsmerkmal tragende Dokumentenschicht selbst. Hiermit ergibt sich der Vorteil einer einfachen Herstellbarkeit: Dokumentenschichten mit gleichartigen Materialien wie typischerweise Polycarbonate lassen sich mit geringem technischem Aufwand effizient laminieren, was im Falle von Dokumentenschichten, welche aus unterschiedlichen Materialien bestehen, nicht gegeben ist.

In einem weiteren Aspekt betrifft die Erfindung ein Dokument mit einem dokumentenindividuellen Sicherheitsmerkmal, wobei das Dokument zumindest eine Dokumentschicht aufweist, wobei sich die zumindest eine Dokumentenschicht über die gesamte Dokumentenfläche erstreckt und wobei die zumindest eine Dokumentschicht in zumindest einem ersten räumlichen Bereich in zumindest einem ersten Wellenlängenbereich Licht absorbierend ist und in zumindest einem zweiten räumlichen Bereich in zumindest einem zweiten Wellenlängenbereich des sichtbaren Lichts transparent ist, wobei die zumindest eine Dokumentschicht ferner zumindest ein optisches dokumentenunspezifisches Sicherheitsmerkmal aufweist. Außerdem weist die zumindest eine Dokumentenschicht eine Oberflächenstruktur in dem ersten Bereich auf, wobei die Oberflächenstruktur zur Abbildung eines das dokumentenindividuelle Sicherheitsmerkmal bildenden Hologramms durch Bestrahlung mit einem Laser ausgebildet ist, wobei der Laserstrahl eine Wellenlänge des ersten oder zweiten Wellenlängenbereichs aufweist.

Dabei ist die Dokumentschicht, welche die Oberflächenstruktur trägt, vorzugsweise die oberste Dokumentschicht des Dokuments.

Nach einer Ausführungsform der Erfindung umfasst das Dokument ferner eine in dem ersten oder zweiten Wellenlängenbereich reflektierende Schicht.

Nach einer Ausführungsform der Erfindung ist die reflektierende Schicht in dem ersten Bereich an dem Dokument, vorzugsweise im Dokument selber angeordnet. Beispielsweise kann es sich bei der reflektierenden Schicht um eine Schicht des Dokumentenkörpers handeln.

Nach einer Ausführungsform der Erfindung umfasst das Dokument ferner eine Schutzschicht für die Oberflächenstruktur auf der obersten Dokumentschicht, wobei die Schutzschicht in dem zweiten Wellenlängenbereich transparent ist. Soll jedoch ein Auslesen der Hologramminformation durch einen Laserstrahl mit einer Wellenlänge in dem ersten Wellenlängenbereich erfolgen, muss die Schutzschicht in diesem Fall auch für Licht der Wellenlänge des ersten Wellenlängenbereichs transparent sein.

Nach einer Ausführungsform der Erfindung weisen die Schutzschicht und die der Schutzschicht zugewandte Seite des Dokuments einen Brechungsindexunterschied von zumindest 0,25 auf.

Nach einer Ausführungsform der Erfindung handelt es sich bei dem ersten Wellenlängenbereich um einen Infrarot- oder UV-Wellenlängenbereich.

Nach einer Ausführungsform der Erfindung weist die Oberflächenstruktur eine Modulationstiefe im Bereich von 50 nm bis 10 µm auf.

Nach einer Ausführungsform der Erfindung weist die Dokumentschicht, welche die Oberflächenstruktur trägt, Partikel zur Lichtabsorption in dem ersten Wellenlängenbereich und zumindest dem einen ersten räumlichen Bereich auf.

Nach einer Ausführungsform der Erfindung sind die Partikel ausschließlich oberflächennah im Dokument, z. B. in der obersten Laminatfolie vorhanden.

Nach einer Ausführungsform der Erfindung sind die Partikel homogen in der zumindest einen Dokumentschicht verteilt. Vorzugsweise sind in die Partikel jedoch ausschließlich in dem ersten räumlichen Bereich vorhanden und homogen verteilt. Dies schließt jedoch nicht aus, dass außerhalb des räumlichen Bereichs vereinzelte Partikel vorhanden sein können - entweder aus herstellungsspezifischen Gründen oder als Sicherheitsmerkmal unter Zunutzemachung der lichtLicht-absorbierenden Eigenschaften der Partikel.

Nach einer Ausführungsform der Erfindung handelt es sich bei dem Partikel um Farbpigmente und/oder Titandioxid.

Nach einer Ausführungsform der Erfindung ist die Dokumentschicht aus einem Polymermaterial ausgebildet.

Nach einer Ausführungsform der Erfindung handelt es sich bei dem Dokument um ein Wert- oder Sicherheitsdokument. Insbesondere kann es sich dabei um Banknoten, ID-Dokumente, Ausweise, Reisepässe, Führerscheine, Zutrittskarten oder Berechtigungsausweise, Tickets, Kreditkarten, Chipkarten, Etiketten, Zahlungsmittel oder dergleichen handeln.

Im Weiteren werden bevorzugte Ausführungsformen der Erfindung anhand der Zeichnungen näher erläutert. Es zeigen:
- Figur 1:: eine schematische Ansicht eines erfindungsgemäßen Dokuments mit einem Sicherheitsmerkmal,
- Figur 2:: eine weitere schematische Ansicht eines erfindungsgemäßen Dokuments mit einem Sicherheitsmerkmal,
- Figur 3:: eine weitere schematische Ansicht eines erfindungsgemäßen Dokuments mit einem Sicherheitsmerkmal in einer Ansicht von oben,
- Figur 4:: ein Flussdiagramm zur Herstellung eines erfindungsgemäßen Dokuments mit einem Sicherheitsmerkmal.

Elemente der nachfolgenden Figuren, die einander entsprechen, sind mit denselben Bezugszeichen gekennzeichnet.

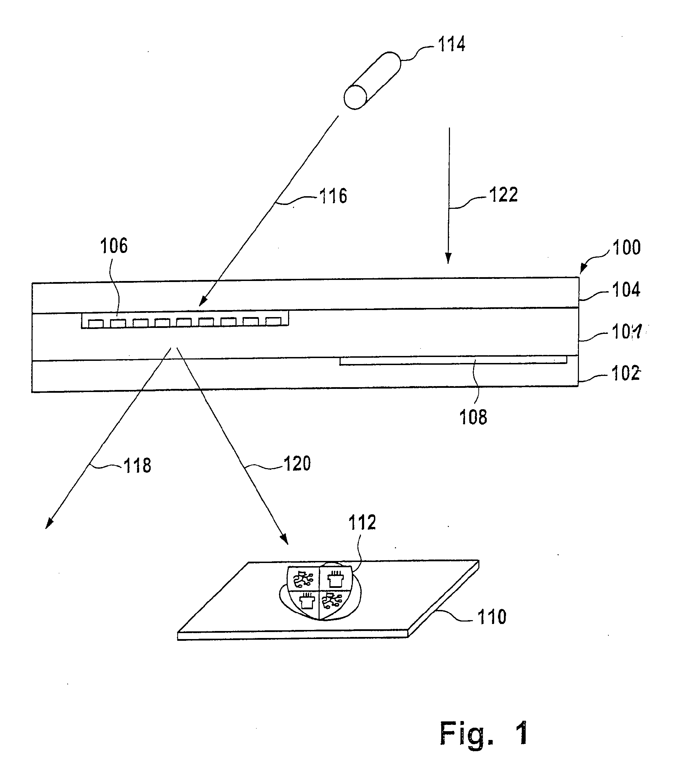

Die Fig. 1 zeigt eine schematische Ansicht einer Ausführungsform eines erfindungsgemäßen Dokuments 100 mit einem Sicherheitsmerkmal 106. Das Dokument in der Fig. 1 hat einen Schichtaufbau und umfasst mehrere Dokumentschichten 101 und 102, z. B. Laminatschichten, die unterschiedliche Informationen und/oder Sicherheitsmerkmale tragen können, z. B. Druck, Lasergravur, innen liegende diffraktive Merkmale usw. So trägt z. B. die Dokumentschicht 102 in der Fig. 1 ein solches optisches Sicherheitsmerkmal 108.

Bei dem Sicherheitsmerkmal 108 kann es sich auch um einen kontaktlosen Chip und eine Antenne handeln, insbesondere einen RF-Chip.

Ferner ist in dem Dokument 100 eine dokumentenspezifische holografische Oberflächenstruktur 106 ausgebildet. Diese Oberflächenstruktur 106 kann dabei mittels eines Lasers ausgelesen werden. Das Auslesen erfolgt dabei so, dass durch den Laser 114 ein Laserstrahl 116 auf die Oberflächenstruktur 106 gerichtet wird. Ein Teil des Laserstrahls wird durch die Oberflächenstruktur 106 nicht gebeugt und propagiert weiter in Richtung 118. Da es sich bei der Oberflächenstruktur jedoch um eine holografische Struktur handelt, wird ein Teil des Laserstrahls 116 in die Richtung 120 abgebeugt. Durch Projektion des Strahls 120 auf eine Projektionsfläche 110 kann auf der Oberfläche 110 ein Hologramm 112, welches in der Oberflächenstruktur eingeschrieben ist, projiziert werden. Dazu muss jedoch das Dokument 100 für die Wellenlänge des Lasers 114 zumindest im Bereich des abgebeugten Strahls 120 transparent sein. Dies kann z. B. durch ein Durchsichtsfenster erreicht werden.

Vorteilhaft ist, wenn eine etwaige Schutzschicht 104, welche um Abnutzungseffekte zu vermeiden, als Klarschutzlack oder Deckfolie auf dem Dokument 100 aufgebracht ist, sowohl für das Laserlicht 116 als auch für sichtbares Licht, mit welchem das Dokument 100 aus der Richtung 122 beleuchtet wird, transparent ist. Ebenfalls vorteilhaft ist, wenn die Schutzschicht 104 einen anderen Brechungsindex als die oberste der Schutzschicht 104 zugewandten Dokumentschicht 102 hat, wodurch beugende Effekte mit einer hohen Intensität erzielt werden können. Der Unterschied der Brechungsindizes zwischen der Schutzschicht 104 und der obersten Dokumentschicht 102 des Dokuments 100 liegt dabei vorzugsweise im Bereich von ungefähr 0,4, jedoch mindestens 0,25.

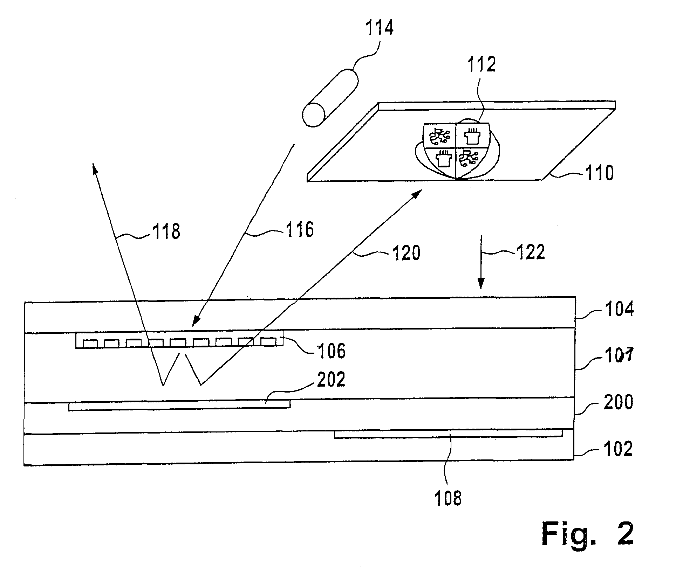

Die Fig. 2 zeigt eine weitere schematische Ansicht eines erfindungsgemäßen Dokuments 100 mit einem Sicherheitsmerkmal 108. Im Unterschied zu der Fig. 1 ist in der Fig. 2 eine zusätzliche reflektierende Schicht 200 vorhanden, welche ein reflektierendes Element 202 trägt. Diese reflektierende Schicht 200 ist dabei innerhalb des laminierten Dokuments 100 angeordnet. Außerdem ist die reflektierende Schicht 200 bzw. deren reflektierendes Element 202 unterhalb der Oberflächenstruktur 106 angeordnet. Dadurch kann durch Bestrahlung der Oberflächenstruktur 106 mit einem Laserstrahl 116 dieser Laserstrahl an der reflektierenden Schicht 200 reflektiert werden.

Aufgrund von Beugungseffekten des Laserstrahls 116 an der Oberfläche 106 entsteht bei Beleuchtung der Oberflächenstruktur 106 mit dem Laserstrahl 116 ein gebeugter Laserstrahl 120, welcher nun durch die Schutzschicht 104 hindurch zurückreflektiert wird und auf eine Projektionsfläche 110 projiziert werden kann. Auf der Projektionsfläche 110 wird dadurch ein Hologramm 112, welches in die Oberflächenstruktur 106 eingeschrieben ist, sichtbar.

Es sei angemerkt, dass das reflektierende Element 202 der reflektierenden Schicht 200 entweder räumlich nur so ausgedehnt ist, dass es die Ausdehnung der Oberflächenstruktur 106 überdeckt. Möglich ist auch, eine großflächige reflektierende Struktur 202 zu verwenden, welche sich über das gesamte Dokument 100 erstreckt. Dies setzt allerdings voraus, dass die reflektierende Schicht 200 vorzugsweise lediglich eine Reflexion in dem Wellenlängenbereich des verwendeten Lasers aufweist. Für sichtbares Licht zum Auslesen der Dokumentinformationen 108, welche in der Schicht 102 enthalten sind, sollte die reflektierende Schicht 200 jedoch diffus reflektierend mit starker Lichtstreuung sein. Dadurch ist eine optimale Lesbarkeit der Dokumentinformation 108 gewährleistet.

Des Weiteren muss das Dokument 100 für die Wellenlänge des Lasers 114 zumindest im Bereich des abgebeugten Strahles 120 transparent sein. Dies kann z. B. durch ein Durchsichtsfenster erreicht werden, wie bereits oben beschrieben.

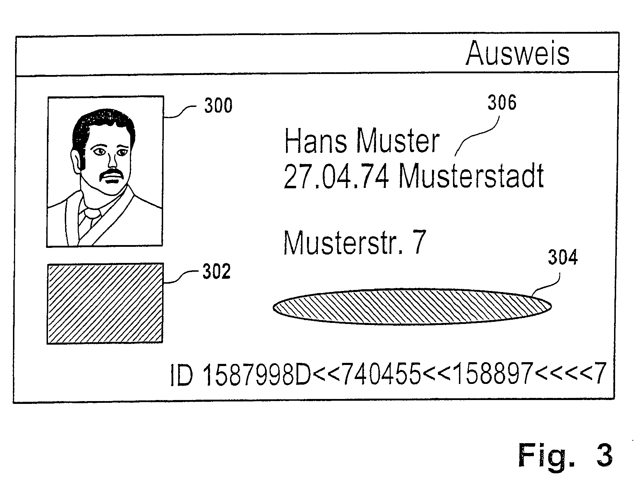

Die Figur 3 zeigt eine weitere schematische Ansicht eines erfindungsgemäßen Dokuments mit einem Sicherheitsmerkmal in einer Aufsicht von oben. Bei dem Dokument in der Figur 3 handelt es sich hierbei um einen Ausweis, wie zum Beispiel einen Personalausweis. Der Personalausweis umfasst personalisierte Informationen, wie ein Foto 300 und eine Kennung 306, welche diesen Ausweis eindeutig einer bestimmten Person zuordenbar machen.

Um nun die Fälschungssicherheit eines solchen Ausweises zu erhöhen, weist der Ausweis in der Figur 3 ferner Sicherheitsmerkmale 302 und 304 auf. Bei dem Sicherheitsmerkmal 302 kann es sich dabei zum Beispiel um eine holographische Struktur (vgl. Struktur 106) handeln. Ebenso ist auch eine Dopplung von zum Beispiel holographischen und anderen optischen Sicherheitsmerkmalen möglich. Insbesondere betrifft dies die redundante Speicherung von z.B. durch Lasergravur erzeugten Personalisierungsdaten im Merkmal 302.

Die holographische Struktur kann zum Beispiel mittels eines Lasers oder einer anderen geeigneten Lichtquelle zur Hologrammprojektion verwendet werden. Je nach Ausweislayout wird dabei das holographische Beugungsbild vor dem Ausweisdokument (zum Beispiel bei einer reflektierenden Schicht innerhalb des Ausweises) oder hinter dem Ausweisdokument (zum Beispiel bei Transparenz für eine passende Wellenlänge) erscheinen.

Hierbei ist es jedoch nicht zwingend notwendig, eine Wellenlänge des Laserlichts für das Auslesen zu verwenden, welche mit jener Wellenlänge identisch ist, mit welcher durch einen Laser die holographische Struktur erzeugt wurde. Ebenfalls ist es nicht zwingend notwendig, zum Auslesevorgang des Hologramms mit einem Laser aus genau derselben Richtung die holographische Struktur zu beleuchten, aus welcher sie mit einem Laser geschrieben wurde. Der Grund liegt darin, dass es sich bei der holographischen Struktur 102 vorzugsweise um ein optisch dünnes Gitter handelt, die im Gegensatz zu optisch dicken Gittern von den Bragg-Bedingungen abweichen können, um zu beugen.

Bei dem Sicherheitsmerkmal 304 kann es sich zum Beispiel um eine Oberflächenprägung oder um ein Wasserzeichen handeln. Entscheidend dafür ist, dass im Falle eines Wasserzeichens der Ausweis zumindest teilweise in dem Bereich des Sicherheitsmerkmals 304, der Personalisierungsdaten und anderer Sicherheitsmerkmale wie z.B. Sicherheitsdruck transparent ist. Bei dem Sicherheitsmerkmal kann es sich auch um herkömmlich drucktechnische, diffraktive oder andere Sicherheitsmerkmale handeln, die nicht in Transmission arbeiten. In diesem Fall genügt die Transparenz bis zum Sicherheitsmerkmal. Allgemein wird aber die Transparenz so gewählt werden, dass im Bereich des erfindungsgemäßen Merkmals 302 eine Absorption der Wellenlänge des ersten Bereichs sichergestellt ist, im Rest des Dokuments können die Transparenzeigenschaften nach üblichen Vorgaben für sichere Dokumente gewählt werden.

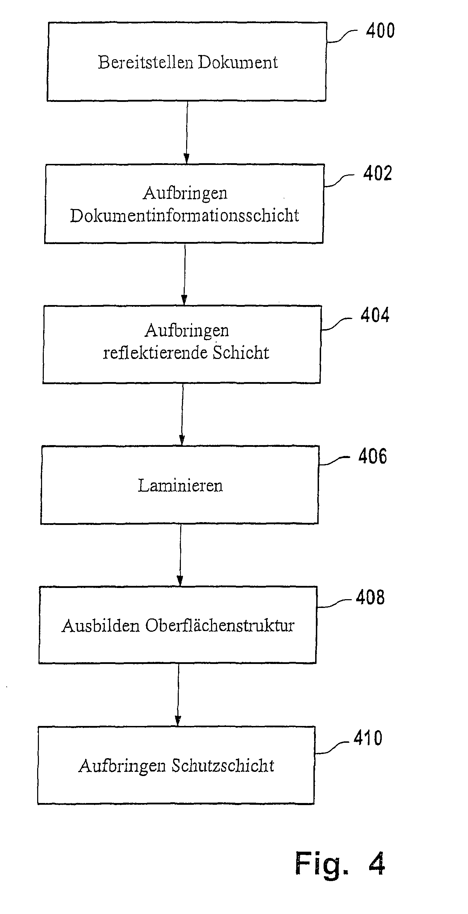

Die Fig. 4 zeigt ein Flussdiagramm zur Herstellung eines erfindungsgemäßen Dokuments mit einem Sicherheitsmerkmal. In Schritt 400 erfolgt das Bereitstellen der Laminationsschichten des Dokuments in Form eines Dokumententenrohlings, wobei die relevanten Schichten in zumindest einem ersten räumlichen Bereich in zumindest einem ersten Wellenlängenbereich Licht absorbierend sind. Sind nun die besagten Schichten in dem ersten räumlichen Bereich in dem ersten Wellenlängenbereich noch nicht Licht absorbierend, so erfolgt in einem optionalen Schritt 402 das Aufbringen einer zusätzlichen Dokumentschicht, welche in zumindest einem ersten räumlichen Bereich in zumindest einem ersten Wellenlängenbereich Licht absorbierend ist.

Ist außerdem eine Rekonstruktion eines Hologramms aus der erzeugten Oberflächenstruktur in Reflexion erwünscht, so erfolgt in einem optionalen Schritt 404 direkt das Einbringen einer reflektierenden Schicht in die Dokumentschichten. Diese reflektierende Schicht ist in dem zweiten Wellenlängenbereich reflektierend.

Es sei angemerkt, dass in die Dokumentschichten des bereitgestellten Dokuments verschiedene Druckelemente, darunter auch Sicherheitsdruckelemente wie Guillochen, OVI-Farben und dergleichen eingebracht werden können.

Entweder direkt nach Schritt 400 oder nach den optionalen Schritten 402 und/oder 404 erfolgt in Schritt 406 das Laminieren des Dokuments.

Anschließend erfolgt in Schritt 408 das Ausbilden einer dokumentenindividuellen Oberflächenstruktur in dem ersten Bereich des Dokuments durch Absorption eines vorzugsweise gepulsten Laserstrahls, wobei der Laserstrahl eine Wellenlänge in dem ersten Wellenlängenbereich aufweist, wobei die Oberflächenstruktur zur Ausbildung eine das Sicherheitsmerkmal bildenden Hologramms ausgebildet ist.

Schließlich erfolgt in einem letzten Schritt 410 gegebenenfalls das Aufbringen einer Schutzschicht für die Oberflächenstruktur auf das Dokument, wobei die Schutzschicht in dem zweiten Wellenlängenbereich transparent ist, welcher zum Auslesen der Hologramminformation verwendet wird. Das Verfahren der Figur 4 kann für die massenhafte Personalisierung von identischen Dokumentenrohlingen verwendet werden, indem beispielsweise in dem Schritt 400 eine größere Menge solcher Dokumentenrohlinge bereitgestellt wird, und die Schritte 402 bis 410 dann für jeden einzelnen dieser Dokumentenrohlinge ausgeführt werden.

### Bezugszeichenliste

- 100: Dokument
- 101: Schicht
- 102: Schicht
- 104: Schutzschicht
- 106: Oberflächenstruktur
- 108: Dokument-Information
- 110: Projektionsfläche
- 112: Hologramm
- 114: Laser
- 116: Laserstrahl
- 118: transmittierter Laserstrahl
- 120: gebeugter Laserstrahl
- 122: Richtung

- 200: reflektierende Schicht
- 202: Reflexionselement

- 300: Foto
- 302: Sicherheitsmerkmal
- 304: Sicherheitsmerkmal
- 306: Kennung

## Patentansprüche

1. Verfahren zur Herstellung eines dokumentenindividuellen Sicherheitsmerkmals (106; 302; 304) für ein Dokument mit den folgenden Schritten:
- Bereitstellen eines Dokumentenrohlings, wobei der Dokumentenrohling zumindest eine Dokumentschicht (101; 102) aufweist, wobei sich die zumindest eine Dokumentenschicht (101; 102) über die gesamte Dokumentenfläche erstreckt, wobei die zumindest eine Dokumentschicht (101; 102) in zumindest einem ersten räumlichen Bereich in zumindest einem ersten Wellenlängenbereich Licht absorbierend ist und in zumindest einem zweiten räumlichen Bereich in zumindest einem zweiten Wellenlängenbereich des sichtbaren Lichts transparent ist, wobei die zumindest eine Dokumentschicht (101; 102) ferner zumindest ein optisches dokumentenunspezifisches Sicherheitsmerkmal aufweist,
- Ausbilden einer dokumentenindividuellen Oberflächenstruktur (106) in dem ersten Bereich der zumindest einen Dokumentschicht (101; 102) durch Absorption von zumindest einem Laserstrahl, wobei der zumindest eine Laserstrahl eine Wellenlänge in dem ersten Wellenlängenbereich aufweist, wobei die Oberflächenstruktur (106) zur Abbildung eines das dokumentenindividuelle Sicherheitsmerkmal (106; 302; 304) bildenden Hologramms (112) ausgebildet ist.

2. Verfahren nach einem der vorigen Ansprüche, wobei die zumindest eine Dokumentenschicht (101; 102) Partikel zur Lichtabsorption in dem ersten Wellenlängenbereich in zumindest dem einen ersten räumlichen Bereich aufweist,
wobei ausschließlich der erste räumliche Bereich die Partikel homogen verteilt aufweist oder
wobei die Partikel homogen in der gesamten zumindest einen Dokumentschicht (101; 102) verteilt sind.

3. Dokument (100) mit einem dokumentenindividuellen Sicherheitsmerkmal (106; 302; 304), wobei das Dokument (100) zumindest eine Dokumentschicht (101; 102) aufweist, wobei sich die zumindest eine Dokumentenschicht (101; 102) über die gesamte Dokumentenfläche erstreckt, **dadurch gekennzeichnet, dass** die zumindest eine Dokumentschicht (101; 102)
- in zumindest einem ersten räumlichen Bereich in zumindest einem ersten Wellenlängenbereich Licht absorbierend ist und in zumindest einem zweiten räumlichen Bereich in zumindest einem zweiten Wellenlängenbereich des sichtbaren Lichts transparent ist,
- eine Oberflächenstruktur (106) in dem ersten Bereich aufweist, wobei die Oberflächenstruktur (106) zur Abbildung eines das Sicherheitsmerkmal (106; 302; 304) bildenden Hologramms (112) durch Bestrahlung mit einem Laser ausgebildet ist, wobei der Laserstrahl eine Wellenlänge des ersten oder zweiten Wellenlängenbereichs aufweist, wobei die zumindest eine Dokumentschicht (101; 102) ferner zumindest ein optisches dokumentenunspezifisches Sicherheitsmerkmal aufweist.

4. Dokument nach Anspruch 3, ferner mit einer in dem ersten und/oder zweiten Wellenlängenbereich reflektierenden Schicht (200).

5. Dokument nach einem der vorigen Ansprüche 3 bis 4, ferner mit einer Schutzschicht (104) für die Oberflächenstruktur (106) auf dem Dokument (100), wobei die Schutzschicht (104) in dem zweiten Wellenlängenbereich transparent ist.

6. Dokument nach Anspruch 5, wobei die Schutzschicht (104) und die der Schutzschicht zugewandte Seite des Dokuments (100) einen Brechungsindexunterschied von zumindest 0,25 aufweist.

7. Dokument nach einem der vorigen Ansprüche 3 bis 6, wobei es sich bei dem ersten Wellenlängenbereich um einen Infrarotlicht- oder UV-Wellenlängenbereich handelt.

8. Dokument nach einem der vorigen Ansprüche 3 bis 7, wobei die Oberflächenstruktur (106) eine Modulationstiefe im Bereich von 50 nm bis 10 µm aufweist.

9. Dokument nach einem der vorigen Ansprüche 3 bis 8, wobei die zumindest eine Dokumentschicht (101; 102) Partikel zur Lichtabsorption in dem ersten Wellenlängenbereich in zumindest dem einen ersten räumlichen Bereich aufweist.

10. Dokument nach Anspruch 9, wobei ausschließlich der erste räumliche Bereich die Partikel homogen verteilt aufweist.

11. Dokument nach Anspruch 9, wobei die Partikel homogen in der gesamten zumindest einen Dokumentschicht (101; 102) verteilt sind.

12. Dokument nach einem der vorigen Ansprüche9 bis 11, wobei es sich bei den Partikeln um Farbpigmente und/oder Titandioxid handelt.

13. Dokument nach einem der vorigen Ansprüche 3 bis 12, wobei die Dokumentschicht (101; 102) aus einem Polymermaterial ausgebildet ist.

14. Dokument nach einem der vorigen Ansprüche 3 bis 13, wobei weitere Dokumentenschichten des Dokuments aus demselben Material ausgebildet sind wie,die das dokumentenindividuelle Sicherheitsmerkmal tragende Dokumentenschicht (101; 102) selbst.

15. Dokument nach einem der vorigen Ansprüche 3 bis 14, wobei es sich bei dem Dokument um ein Wert- oder Sicherheitsdokument handelt.

## Claims

1. Method for producing a document-specific security feature (106; 302; 304) for a document, comprising the steps of:
- providing a document blank, wherein the document blank has at least one document layer (101; 102), wherein the at least one document layer (101; 102) extends over the entire document area, wherein the at least one document layer (101; 102) in at least one first spatial region absorbs light in at least one first wavelength region and in at least one second spatial region is transparent in at least one second wavelength region of the visible light, wherein the at least one document layer (101; 102) furthermore has at least one optical document-non-specific security feature,
- forming a document-specific surface structure (106) in the first region of the at least one document layer (101; 102) by absorbing at least one laser beam, wherein the at least one laser beam has a wavelength in the first wavelength region, wherein the surface structure (106) is configured for imaging a hologram (112) forming the document-specific security feature (106; 302; 304).

2. Method according to one of the preceding claims, wherein the at least one document layer (101; 102) has particles for absorbing light in the first wavelength region in at least the one first spatial region,
wherein only the first spatial region has the particles in homogeneous distribution or
wherein the particles are distributed homogeneously in the entire at least one document layer (101; 102).

3. Document (100) comprising a document-specific security feature (106; 302; 304), wherein the document (100) has at least one document layer (101; 102), wherein the at least one document layer (101; 102) extends over the entire document area, **characterized in that** the at least one document layer (101; 102)
- in at least one first spatial region absorbs light in at least one first wavelength region and in at least one second spatial region is transparent in at least one second wavelength region of the visible light,
- has a surface structure (106) in the first region, wherein the surface structure (106) is configured for imaging a hologram (112) forming the security feature (106; 302; 304) by using laser radiation, wherein the laser beam has a wavelength of the first or second wavelength region, wherein the at least one document layer (101; 102) furthermore has at least one optical document-non-specific security feature.

4. Document according to Claim 3, furthermore comprising a layer (200) which reflects in the first and/or second wavelength region.

5. Document according to one of the preceding Claims 3 to 4, furthermore comprising a protective layer (104) for the surface structure (106) on the document (100), wherein the protective layer (104) is transparent in the second wavelength region.

6. Document according to Claim 5, wherein the protective layer (104) and that side of the document (100) that faces the protective layer have a refractive index difference of at least 0.25.

7. Document according to one of the preceding Claims 3 to 6, wherein the first wavelength region is an infrared light or UV wavelength region.

8. Document according to one of the preceding Claims 3 to 7, wherein the surface structure (106) has a modulation depth in the region of 50 nm to 10 µm.

9. Document according to one of the preceding Claims 3 to 8, wherein the at least one document layer (101; 102) has particles for absorbing light in the first wavelength region in at least the one first spatial region.

10. Document according to Claim 9, wherein only the first spatial region has the particles in homogeneous distribution.

11. Document according to Claim 9, wherein the particles are distributed homogeneously in the entire at least one document layer (101; 102).

12. Document according to one of the preceding Claims 9 to 11, wherein the particles are colour pigments and/or titanium dioxide.

13. Document according to one of the preceding Claims 3 to 12, wherein the document layer (101; 102) is made from a polymer material.

14. Document according to one of the preceding Claims 3 to 13, wherein further document layers of the document are made from the same material as the document layer (101; 102), which carries the document-specific security feature, itself.

15. Document according to one of the preceding Claims 3 to 14, wherein the document is a valuable or security document.

## Revendications

1. Procédé pour réaliser une caractéristique individuelle de sécurité (106; 302; 304) pour un document, le procédé comportant les étapes suivantes :
préparer une ébauche de document, l'ébauche de document présentant au moins une couche de document (101; 102), la ou les couches de document (101; 102) s'étendant sur la totalité de la surface du document, la ou les couches de document (101; 102) absorbant sur au moins une première partie spatiale la lumière dans au moins une première plage de longueurs d'onde et étant sur une deuxième partie spatiale transparentes à au moins une deuxième plage de longueurs d'onde de la lumière visible, la ou les couches de document (101; 102) présentant en outre au moins une caractéristique optique de sécurité non spécifique au document,
former une structure individuelle de surface (106) du document dans la première partie de la ou des couches de document (101; 102) par absorption d'au moins un faisceau laser, le ou les faisceaux laser présentant une longueur d'onde située dans la première plage de longueurs d'onde, la structure de surface (106) étant configurée pour former l'image d'un hologramme (112) qui forme la caractéristique individuelle de sécurité (106; 302; 304) du document.

2. Procédé selon la revendication précédente, dans lequel la ou les couches de document (101; 102) présentent des particules d'absorption de lumière dans la première plage de longueurs d'onde sur au moins la première partie spatiale, seule la première partie spatiale présentant des particules réparties de manière homogène, les particules étant réparties de manière homogène dans la totalité de la ou des couches de document (101; 102).

3. Document (100) présentant une caractéristique individuelle de sécurité (106; 302; 304), le document (100) présentant au moins une couche de document (101; 102), la ou les couches de document (101; 102) s'étendant sur la totalité de la surface du document, **caractérisé en ce que** la ou les couches de document (101; 102) :
absorbent la lumière dans au moins une première plage de longueurs d'onde sur au moins une première partie spatiale et sont transparentes à au moins une deuxième plage de longueurs d'onde de la lumière visible sur au moins une deuxième partie spatiale,
présentent dans la première partie une structure de surface (106), la structure de surface (106) étant configurée pour, lorsqu'elle est irradiée par un laser, former l'image d'un hologramme (112) qui forme la caractéristique de sécurité (106; 302; 304), le faisceau laser présentant une longueur d'onde située dans la première ou la deuxième plage de longueurs d'onde, la ou les couches de document (101; 102) présentant en outre au moins une caractéristique optique de sécurité non spécifique au document.

4. Document selon la revendication 3, doté en outre d'une couche réfléchissante (200) dans la première et/ou la deuxième plage de longueur d'onde.

5. Document selon l'une des revendications 3 à 4 qui précèdent, présentant en outre une couche de protection (104) pour la structure de surface (106) prévue sur le document (100), la couche de protection (104) étant transparente dans la deuxième plage de longueurs d'onde.

6. Document selon la revendication 5, dans lequel la couche de protection (104) et la face du document (100) tournée vers la couche de protection présentent une différence d'indices de réfraction d'au moins 0,25.

7. Document selon l'une des revendications 3 à 6 qui précèdent, dans lequel la première plage de longueurs d'onde est une plage de longueurs d'onde de lumière infrarouge ou de lumière UV.

8. Document selon l'une des revendications 3 à 7 qui précèdent, dans lequel la structure de surface (106) présente une profondeur de modulation de l'ordre de 50 nm à 10 µm.

9. Document selon l'une des revendications 3 à 8 qui précèdent, dans lequel la ou les couches de document (101; 102) présentent sur au moins une première partie spatiale des particules d'absorption de lumière dans la première plage de longueurs d'onde.

10. Document selon la revendication 9, dans lequel seule la première partie spatiale présente des particules réparties de manière homogène.

11. Document selon la revendication 9, dans lequel les particules sont réparties de façon homogène dans la totalité de la ou des couches de document (101; 102).

12. Document selon l'une des revendications 9 à 11 qui précèdent, dans lequel les particules sont des pigments colorés et/ou du dioxyde de titane.

13. Document selon l'une des revendications 3 à 12 qui précèdent, dans lequel la couche de document (101; 102) est formée d'un matériau polymère.

14. Document selon l'une des revendications 3 à 13 qui précèdent, dans lequel d'autres couches du document sont formées du même matériau que celui de la couche de document (101; 102) proprement dite qui porte la caractéristique individuelle de sécurité du document.

15. Document selon l'une des revendications 3 à 14 qui précèdent, dans lequel le document est un document de valeur ou un document sécurisé.
